# EUROPEAN PATENT APPLICATION

(11) **EP 1 447 299 A2**
(43) Date of publication of application: **18.08.2004**
(21) Application number: 04075400.4
(22) Date of filing: 10.02.2004
(51) Int. Cl.: B62B 7/02, B62K 27/00

(54) **Trailer for transporting small children**

(30) Priority: 17.02.2003 NL 1022702
(71) Applicant: Kid Car Company B.V., 8430 AA Oosterwolde (NL)
(72) Inventor: Vogel, Kees de, 8430 AA Oosterwolde (NL)

(57) **Abstract**

The invention relates to a trailer for transporting young children, consisting of a frame (1a,1b) provided with wheels (2a,2b,3), to which a bucket type of seat (4) made of a synthetic material is connected. Over the seat (4), a roller structure is mounted consisting of a U-shaped bow (5), a front side of which is mounted for rotation to the seat (4) while the legs stretch from the front side of the seat (4) along and above both sides of the seat (4) to the back side. The legs are supported by a folded O-shaped bow (8), of which one straight side rests on the seat (4) while the other straight side forms a handle.

## Description

The invention relates to a trailer for transporting small children, comprising a frame provided with wheels, onto which a bucket type of seat made of a synthetic material is connected. Trailers of this type are known. In order to prevent a child from falling off the trailer, because of carelessness or because of the trailer making an unexpected movement, the child is or the children are usually fastened to the seat with the aid of a safety belt. This measure is generally speaking sufficient to safeguard the safety of the children. Nevertheless one can imagine that under exceptional circumstances a trailer may overturn and that a head of a child hits the ground. In order to safeguard the safety of the children even under these exceptional circumstances, the trailer according to the invention is characterised in that round the seat a roller structure is placed.

In an embodiment which may be realised easily, the trailer is characterised in that the roller structure comprises a U-shaped bow, of which the cross connection is mounted to the front side of the seat and of which the legs operationally stretch from the front side of the seat along and above both sides of the seat to the back side.

A very favourable embodiment, in which the roller structure may withstand large forces and in which the roller structure is moreover used for absorbing forces, exerted by an accompanying person onto the trailer, is characterised in that the roller structure moreover comprises a folded 0-shaped bow, of which a first, straight side is operationally connected onto the back side of the seat, of which a second straight side may be used by a person for pushing the trailer forward and of which the two bent sides are connected to the ends of the U-shaped bow.

A favourable embodiment according to a further aspect of the invention which makes it possible to fold the roller structure in such a manner that the trailer may easily be transported in for example a car is characterised in that the two bent sides of the folded 0-shaped bow are mounted for rotation to the ends of the U-shaped bow and that the first straight side of the folded 0-shaped bow are detachably connected to the seat.

A further very favourable embodiment is characterised in that in a folded position of the roller structure, the legs of the U-shaped bow rest on the seat and that the second straight side of the 0-shaped bow is positioned behind and underneath the seat. In such a folded situation the trailer is not significantly larger than a trailer without a roller structure.

A further favourable embodiment that enables a further compactification is characterised in that the straight side of the 0-shaped bow is detachably connected to a remaining part of the 0-shaped bow. By taking off this part of the bow and by removing the wheels, the volume of the trailer may be reduced to a minimum, which may be of importance for the user but which above all important for the manufacturer, as he may save on the packaging costs, the storage costs and the transportation costs.

A further favourable embodiment of the invention is characterised in that the first straight side of the folded 0-shaped bow is operationally attached inside a transverse groove in the seat. In the unlikely event of the trailer overturning, the roller structure is pushed into the groove, which means that the forces are spread over a large surface area. This makes it possible to design the bucket type of seat thin-walled and light, without introducing a safety risk. A further favourable embodiment is characterised in that the first straight side of the folded 0-shaped bow is operationally attached in the groove by rotatably mounted blocks, which can easily be set free.

A further favourable embodiment of the invention is characterised in that the roller structure moreover constitutes a frame for supporting a drip-proof cover for the seat. In that case, the drip-proof cover is preferably detachably connected to the roller structure.

The invention will now be further explained with a reference to the following figures, in which:
- Fig. 1: schematically shows a possible embodiment of a trailer according to the invention in top view;
- Fig. 2: schematically shows this trailer in an operational condition in side view;
- Fig. 3: schematically shows this trailer in a partly folded condition in side view;
- Fig. 4: schematically shows this trailer in a folded condition in side view;
- Fig. 5: schematically shows this trailer in its packaging in side view.

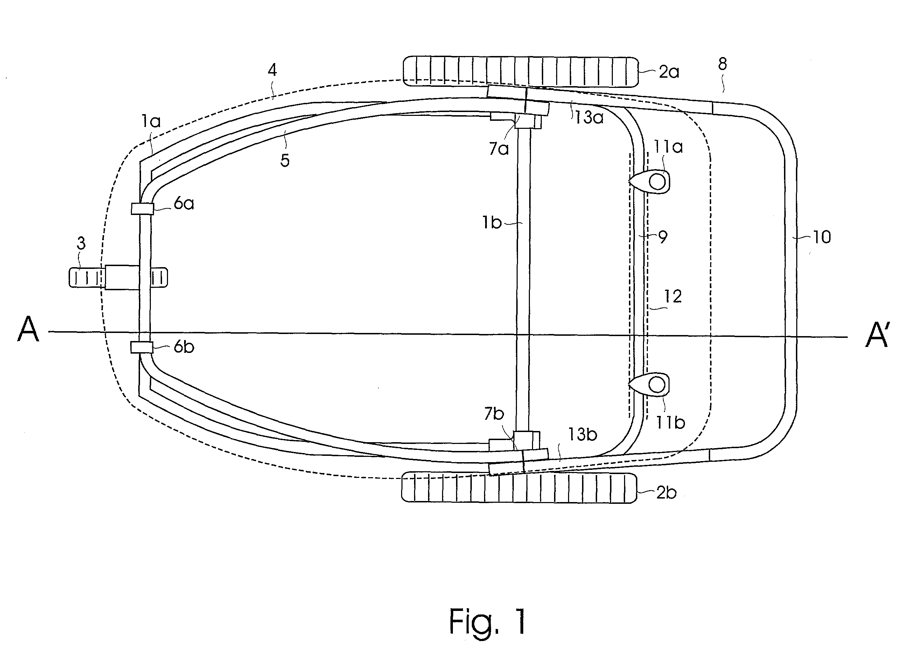

Fig. 1 schematically shows a possible embodiment of a trailer according to the invention in top view, consisting of a frame 1a, 1b onto which two back wheels 2a,2b are mounted and a swivelling front wheel 3. On frame 1a, 1b a bucket type of seat 4 is placed, indicated in this figure with a dotted line, in which one or more small children may be seated which are normally attached to the seat with the aid of a safety belt. The trailer may be pushed, but it may also be connected to a bicycle and pulled forward. In order to safeguard the safety of the children, even when the trailer overturns, a roller structure is provided consisting of a U-shaped bow 5 which is mounted for rotation in two hinges 6a,6b, mounted on frame 1a, of which the legs run upwards, amply above the heads of the children that may be present in seat 4 and of which the ends stretch out to above the back of seat 4. At the ends, a folded 0-shaped bow 8 is rotatably mounted to it with two hinges 7a,7b, of which a first straight side 9 is operationally connected to the back of seat 4 and of which a second straight side 10 can be used by an accompanying person to push the trailer forward. The first straight side 9 is attached inside a transverse groove 12 in the seat with the aid of two rotatably mounted blocks 11a, 11b. The two bent sides 13a, 13b are rotatably connected to the ends of U-shaped bow 5.

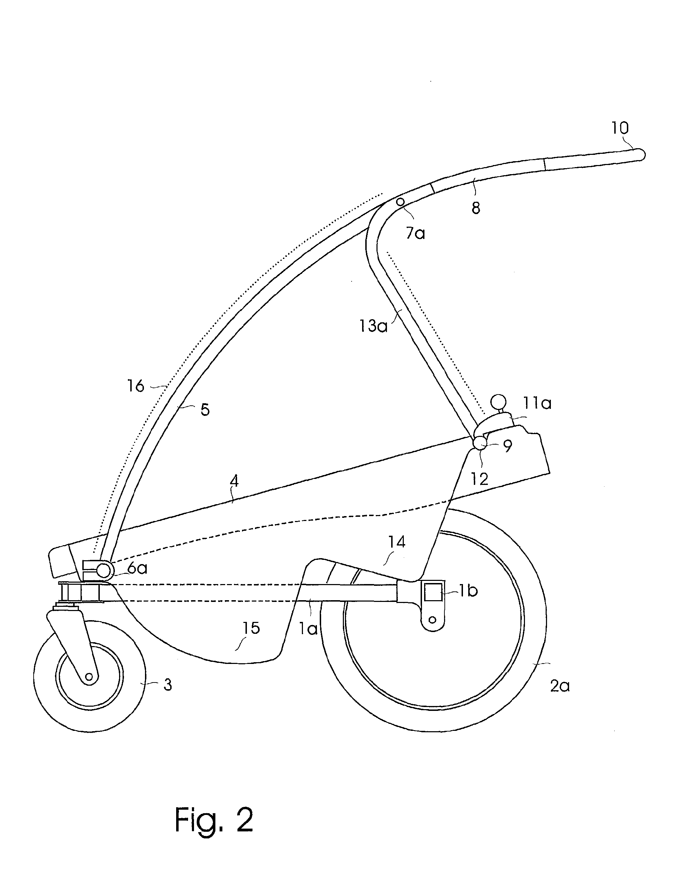

Fig. 2 schematically shows this trailer in an operational condition in side view in a cross-section according to line AA' in Fig. 1. We see frame 1a, 1b, back wheels 2a, swivelling front wheel 3 and the bucket type of seat 4, mounted on frame 1a, 1b, in which a seat 14 and a foot space 15 are left open, in such a manner that one child or a number of children may be seated, which are normally fastened with the aid of a safety belt, not shown in the figure. The trailer is provided with a roller structure, consisting of a U-shaped bow 5 which is mounted for rotation in two hinges 6a,6b, mounted on frame 1a, of which the legs run upwards, amply above the heads of the children that may be present in seat 4 and of which the ends stretch out to above the back of seat 4. At the ends, a folded 0-shaped bow 8 is rotatably mounted to it with two hinges 7a,7b, of which a first straight side 9 is operationally connected to the back of seat 4 and of which a second straight side 10 can be used by an accompanying person to push the trailer forward. The first straight side 9 is attached inside a transverse groove 12 in the seat with the aid of two rotatably mounted blocks 11a, 11b. The two bent sides 13a, 13b are rotatably connected to the ends of U-shaped bow 5. U-shaped bow 5 and folded 0-shaped bow 8 form a support for a drip-proof cover 16 for the occupants, which cover is indicated here schematically with a dotted line.

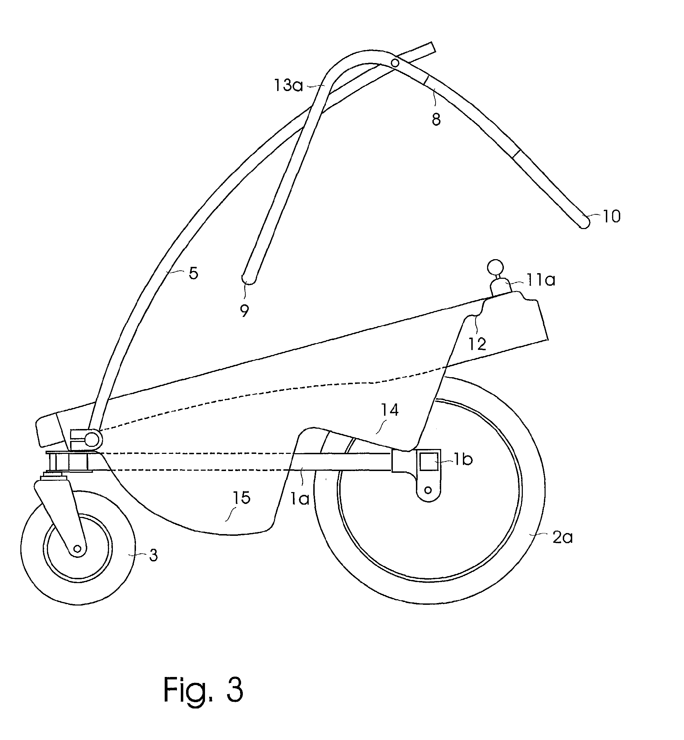

Fig. 3 schematically shows this trailer in a partly folded condition in side view, in a cross-section according to line AA' in Fig. 1, in which the blocks 11a, 11b have been turned aside so that the first straight side 9 of bent 0-shaped bow 8 may come out of groove 12.

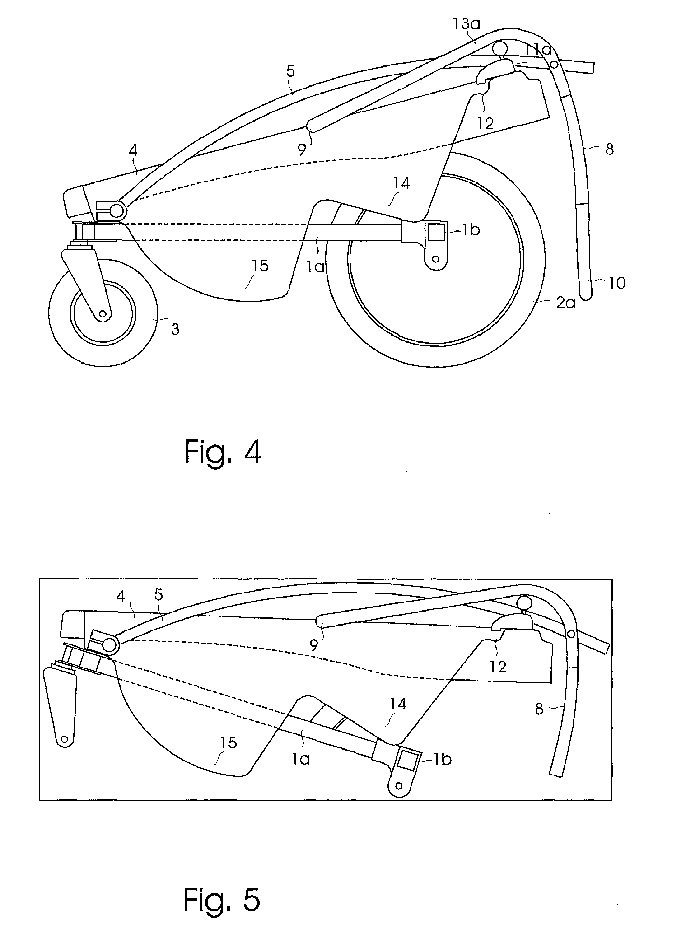

Fig. 4 schematically shows this trailer in a folded condition in side view, in a cross-section according to line AA' in Fig. 1, in which the legs of U-shaped bow 5 rest on seat 4 and in which the second straight side 10 of bent 0-shaped bow 8 is pushed downward behind the trailer.

Fig. 5 schematically shows this trailer in its packaging in side view, where the trailer is folded together according to Fig. 4, but where the wheels 2a,2b, swivelling wheel 3 and the second straight side 10 of 0-shaped bow 8 have not yet been mounted. In this position, the parts that have not yet been mounted may be placed inside seat 4. It is clear that in this manner a very compact packaging can be used. After unpacking, a user can mount the wheels and secure them with for example a split pin and place the second straight side 10 of 0-shaped bow 8, with a snap-in mechanism, well known in the art, securing the connection.

## Claims

1. Trailer for transporting small children, comprising a frame provided with wheels, onto which a bucket type of seat made of a synthetic material is connected, **characterised in that** over the seat a roller structure is placed.

2. Trailer according to claim 1, **characterised in that** the roller structure comprises a U-shaped bow, of which the cross connection is mounted to the front side of the seat and of which the legs operationally stretch from the front side of the seat along and above both sides of the seat to the back side.

3. Trailer according to claim 2, **characterised in that** the roller structure moreover comprises a folded 0-shaped bow, of which a first, straight side is operationally connected onto the back side of the seat, of which a second straight side may be used by a person for pushing the trailer forward and of which the two bent sides are connected to the ends of the U-shaped bow.

4. Trailer according to claim 3, **characterised in that** the two bent sides of the folded 0-shaped bow are mounted for rotation to the ends of the U-shaped bow and that the first straight side of the folded 0-shaped bow are detachably connected to the seat.

5. Trailer according to claim 4, **characterised in that** in a folded position of the roller structure, the legs of the U-shaped bow rest on the seat and that the second straight side of the 0-shaped bow is positioned behind and underneath the seat.

6. Trailer according to claim 4 or 5, **characterised in that** the straight side of the 0-shaped bow is detachably connected to a remaining part of the 0-shaped bow.

7. Trailer according to claim 3, **characterised in that** the first straight side of the folded 0-shaped bow is operationally attached inside a transverse groove in the seat.

8. Trailer according to claim 7, **characterised in that** the first straight side of the folded 0-shaped bow is operationally attached in the groove by rotatably mounted blocks.

9. Trailer according to one of the previous claims, **characterised in that** the roller structure moreover constitutes a frame for supporting a drip-proof cover for the seat.

10. Trailer according to claim 9, **characterised in that** the drip-proof cover is detachably connected to the roller structure.
